Europäisches Patentamt

European Patent Office

Office européen des brevets

(11) Publication number: **0 084 453**
**B1**

(12) **EUROPEAN PATENT SPECIFICATION**

(45) Date of publication of patent specification: **25.10.89**

(51) Int. Cl.⁴: **C 08 J 5/06**

(21) Application number: **83300228.0**

(22) Date of filing: **18.01.83**

(54) Fiber reinforced rubber manufacture.

(30) Priority: **19.01.82 JP 6920/82**

(43) Date of publication of application:
**27.07.83 Bulletin 83/30**

(45) Publication of the grant of the patent:
**25.10.89 Bulletin 89/43**

(84) Designated Contracting States:
**AT DE FR GB IT**

(56) References cited:
**GB-A- 763 347**
**US-A-4 259 404**

**Chemical Abstracts, vol. 94, no. 26, 29 June
1981, Columbus, OH (US); p. 68, no. 210092y &
JP-A-81 02 156**

(73) Proprietor: **MITSUBOSHI BELTING LTD.
No. 1-21, Hamazoedori 4-Chome Nagata-ku
Kobe-shi Hyogo (JP)**

(72) Inventor: **Mashimo, Satoshi
13-15, 2-chome Nishishinmachi
Akashi Hyogo (JP)**
Inventor: **Tanaka, Masayuki
NO. 11-1-202, 3-chome Tamondai
Tarumi-ku Kobe (JP)**
Inventor: **Kinoshita, Takashi
No. 1184,Kitahonmachi Takasago-cho
Takasago, Hyogo (JP)**

(74) Representative: **Jones, Michael Raymond et al
HASELTINE LAKE & CO. Hazlitt House 28
Southampton Buildings Chancery Lane
London WC2A 1AT (GB)**

Courier Press, Leamington Spa, England.

# EP 0 084 453 B1

## Description

### Technical field

This invention relates to the manufacture of bonded fiber and rubber structures such as used in transmission and conveyor belts, hoses, tires, etc.

### Background art

In one form of reinforced rubber structure, fibers are embedded in the rubber. A number of different materials have been used for such fibers, including polyester, polyamide, aromatic polyamides, etc., synthetic resins. One improved aromatic polyamide fiber provided for such use is that provided by E. I. duPont de Nemours & Co. under the trademark Kevlar. Such Kevlar aromatic polyamide fibers have high strength, high modulus of elasticity, high thermal stability, maintained high strength under high temperature and high humidity conditions, and high modulus of tenacity characteristics. Such fibers, however, have the serious disadvantage in having relatively poor adhesive bonding with rubber and having relatively poor bending fatigue stability in the form of a complex with the rubber. Still further, such fibers, in the form of conventional cord, tend to fray at exposed cut surfaces of the complex and, thus, have serious disadvantages in the use thereof in belts and the like.

It is known to process such Kevlar fibers by subjecting them initially to a resorcinol-formalin-rubber latex liquid before bonding them to the rubber.

In another method of forming such reinforced rubber structures, the fibers are first pretreated with epoxy or isocyanate compound before subjection to the resorcinol-formalin-rubber latex liquid.

Such a method is disclosed in US—A—4,259,404.

Where the fibers are treated only by subjection to the resorcinol-formalin-rubber latex liquid, the bending fatigue stability is quite good, but the adhesiveness is quite poor. Where the fibers are first pretreated with the epoxy or isocyanate compound, the adhesiveness is improved but the fibers become relatively solid so as to have relatively low bending fatigue stability.

An improved manufacture of such fiber reinforced rubber material has been found to result from the pretreatment of the aromatic polyamide fiber with epoxy compound having at least one or more epoxy groups and rubber latex dissolved in a suitable solvent followed by a treatment with the resorcinol-formalin-rubber latex adhesive liquid discussed above prior to the provision of the fiber is associated with a body of unvulcanized rubber and subsequent vulcanization of the associated fiber and rubber. Such a method has been found to provide substantially improved bending fatigue stability and fray resistance, although having somewhat limited adhesive characteristics relative to the rubber.

According to the present invention there is provided a method of manufacture of a fiber and rubber composite structure comprising the steps of:

(a) subjecting an aromatic polyamide fiber to a treating agent comprising epoxy resin denatured with urethane such that the resin has a urethane bond in the molecule at at least one terminal epoxide group, in a solvent;

(b) drying the treated fiber;

(c) associating the dried treated fiber with a body of unvulcanized rubber compound; and

(d) vulcanizing the rubber compound with said dried treated fiber associated therewith.

In a modified form of the invention, the treated fiber is further subjected to a liquid comprising a mixture of the initial condensate consisting of a resorcinol and formalin, and rubber latex.

In the illustrated embodiment, the treated fiber is subjected to a heat treatment for approximately two minutes at approximately 200°C.

In the illustrated embodiment, the solid concentration of the urethane denatured epoxy resin in the solvent is in the range of approximately 1% to 20%.

In the illustrated embodiment, the mole ratio of resorcinol to formalin is in the range of approximately 1 to 0.5 and 3.

The method of the present invention provides an improved fiber and rubber composite structure avoiding the disadvantages of the prior art structures in a novel and simple manner.

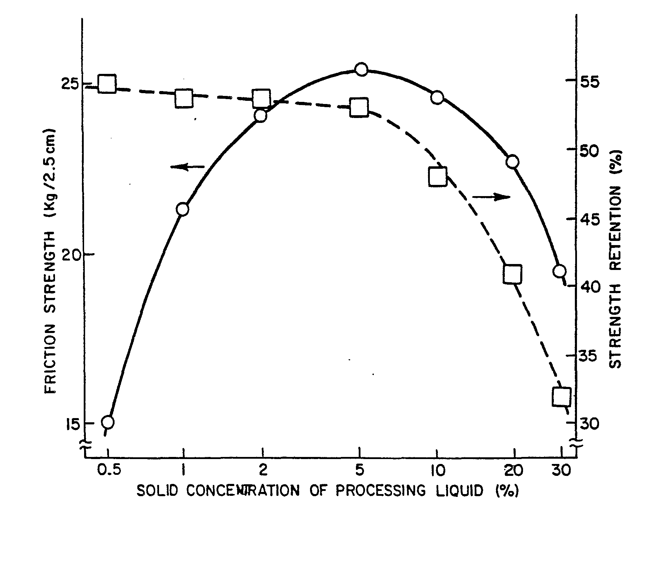

### Brief description of the drawing

Other features and advantages of the invention will be apparent from the following description taken in connection with the accompanying drawing wherein the figure comprises a chart illustrating the effect of the solid concentration of the processing liquid relative to the friction strength and strength retention of the structure.

### Best mode for carrying out the invention

In one exemplary embodiment of the invention, a bonded fiber and rubber structure is formed by the method of subjecting an aromatic polyamide fiber to a treating agent comprising epoxy resin denatured with urethane. The treated fiber is dried and then associated with a body of unvulcanized rubber compound. Upon vulcanizing the rubber compound with the dried treated fiber associated therewith, an improved resultant bonded fiber and rubber composite structure is provided.

In a modification of the above method, the dried treated fiber is further subjected to a second treating

2

liquid comprising a mixture of the initial condensate of resorcinol and formalin, and rubber latex. The further treated fiber is then dried and then glued to the unvulcanized rubber, which is subsequently vulcanized.

The aromatic polyamide fiber, in one form, comprises Kevlar, a product of E. I. duPont deNemours & Co. Illustratively, the fiber may be formed of poly-p- or m-benzamide, or poly-p-phenyleneterephalicamide or poly-m-phenyleneisophthalicamide aromatic polyamide resin.

The rubber preferably comprises styrene-butadienevinyl pyridine rubber, isobutylene-isoprene rubber, chloroprene rubber, natural rubber, ethylene-propylene terpolymer, etc., or blends thereof. The preferred rubbers include chloroprene, styrene-butadiene-vinyl pyridine rubbers used either alone or in a mixture with each other.

The epoxy resin used herein is denatured with urethane so as to contain a urethane coupling inside the molecule with the epoxy group at the end of the molecule. For the processing liquid, the urethane denatured epoxy resin is mixed with a suitable solvent such as toluene. In the preferred embodiment, the solid concentration of the urethane denatured epoxy resin in the solvent is in the range of approximately 1% to 20%. The mixture may comprise a solution, suspension, or emulsion, as desired. It has been found that with a concentration of less than 1%, the adhesiveness and fraying characteristics are poor, and when the concentration is more than 20%, the bending fatigue stability is poor.

After subjection to the urethane denatured epoxy resin liquid, the fiber is dried at a temperature of approximately 180°C to 200°C, and is further heat treated at a temperature of up to approximately 220°C.

Where the fiber is further subjected to the resorcinol-formalin-rubber mixture, the fiber is subsequently heat treated at a temperature of approximately 180°C to 240°C before association with the unvulcanized rubber. The mole ratio of resorcinol to formalin in the second treating liquid is preferably in the range of 1 to 0.5 to 3 for improved adhesive characteristics.

After subjecting the fibers to the indicated treatment steps, the dried fiber may be stored as desired prior to the use thereof in the rubber composite manufacture. The improved fiber bonded rubber composite may be advantageously used in transmission belts, conveyor belts, tires, hoses, etc., where high adhesive strength and bending strength and resistance to bending fatigue are required.

Example I

A Kevlar fiber cord formed of 1500D/1×4 is immersed in the processing liquid consisting of urethane denatured epoxy resin identified as EPX-23-4, manufactured by Asahi Denka of Japan, 100 parts; DMP-30 catalyst 600 parts; and Toluene solvent 2014 parts. The treated fiber is heat treated for 2 minutes at 200°C. The treated cord is wound onto a tacky, unvulcanized rubber tape wound on a drum whereon chloroprene rubber is laminated in a thickness of approximately 3 mm. The sample is vulcanized for approximately 30 minutes at 150°C.

Upon completion of the vulcanization, the sample is cut to a width of 2.5 cm and tested for frictional bonding strength, strength before bending, strength after bending, strength retention, and fraying characteristics. In effecting such testing, an Autograph friction tester, made by Shimadzu Corporation of Japan, is utilized.

The rubber to which the fiber is bonded is formulated of 100 parts by weight chloroprene rubber, 4 parts by weight magnesia, 15 parts by weight zinc white, 2 parts by weight vulcanization accelerator, .5 parts by weight sulfur, 2 parts by weight antioxidant, 65 parts by weight carbon black, and 8 parts by weight oil.

Example II

The sample of fiber-rubber composite, in accordance with the invention, is made by treating the fiber firstly in the manner described in Example I and following the heat treatment, immersing the heated dried fiber in a resorcinol-formalin-latex liquid formed of 100 parts by weight chloroprene latex, 14.6 parts by weight resorcinol, 9.2 parts by weight formalin, 1.5 parts by weight caustic soda, and 262.5 parts by weight water. The fiber is subsequently given a heat treatment for 2 minutes at 200°C prior to the winding of the fiber onto the tacky tape wound on the drum, and the lamination of 3 mm of chloroprene rubber compound, as set out in Example I, vulcanized thereto as indicated.

Example III

The Kevlar fiber cord is dipped in a processing liquid consisting of 100 parts by weight Epicoat 828, 9 parts by weight DMP-30 catalyst, and 2491 parts by weight Toluene. After heat treatment for 2 minutes at 200°C, the dried treated fiber is dipped in the resorcinol-formalin-latex liquid, as indicated above, given a further heat treatment for 2 minutes at 200°C. The further treated and dried fiber is wound onto the tacky tape on the drum and a sample formed with the laminated 3 mm chloroprene rubber, as indicated above.

Example IV

The Kevlar fiber cord is immersed in a processing liquid consisting of 100 parts Epicoat 828, 50 parts CE-050 (a liquid chloroprene rubber of terminal epoxy, carboxyl group of Electronic Chemicals of Japan), 9 parts DMP-30 catalyst, and 2491 parts Toluene. The treated fiber is then given a heat treatment for 2 minutes at 200°C and the dried treated fiber is then immersed in the resorcinol-formalin-latex liquid, as

3

described above, and given a heat treatment for 2 minutes at 200°C for completing the bonding of the further treated dried of the above-indicated rubber compound to form a further sample.

Example V

The Kevlar fiber cord is immersed in the resorcinol-formalin-latex liquid and given a heat treatment for 2 minutes at 200°C before being vulcanized with the rubber compound to form the desired sample.

In each of the examples, the vulcanization of the rubber is effected by subjection thereof to steam for 30 minutes at 8 kg/cm².

In the bending test, the 2.5 cm wide sample is wrapped around a rotating bending bar. One end of the sample is secured to a frame and the other end is loaded with a 2 kg weight. The bending bar is reciprocally rotated 5000 times. The strength of the sample is measured at a tension speed of 50 mm/min.

In determining the fray characteristics, the vulcanized samples are cut so that the top of the cord was cut along the embedded cord with a knife. The cut surface is rubbed with a nail 10 times and the fraying characteristics visually determined.

The results of the sample test are illustrated in the following summary table.

Test summary

|  | Ex. I | Ex. II | Ex. III | E. IV | Ex. V |
|---|---|---|---|---|---|
| Friction bonding strength (kg/2.5 cm) | 21.6 | 25.4 | 18.7 | 19.3 | 7.2 |
| Strengrh before bending test (kg) | 240 | 232 | 213 | 225 | 222 |
| Strength after bending test (kg) | 125 | 123 | 77 | 119 | 123 |
| Strength retention (%) | 52 | 53 | 36 | 53 | 55 |
| Fraying degree | Good | Excellent | Good | Excellent | Poor |

As can be seen from the table, the samples of Examples I and II made by the method of the present invention provide improved characteristics relative to the samples manufactured in the conventional prior art manner, i.e. Examples III, IV and V.

Examples VI, VII, VIII, IX, X, XI, XII

Samples are manufactured in accordance with Example I wherein the solid concentration of the urethane denatured epoxy resin in the liquid was selectively made to be 0.5%, 1%, 2%, 5%, 10%, 20%, and 30%. The resultant friction strength, strength retention, and fraying characteristics are set out in the following Table:

|  | Ex. VI | Ex. VII | Ex. VIII | Ex. IX | Ex. X | Ex. XI | Ex. XII |
|---|---|---|---|---|---|---|---|
| Solid density % property | 0.5 | 1 | 2 | 5 | 10 | 20 | 30 |
| Friction strength (kg/2.5 cm) | 15.1 | 21.3 | 24.1 | 25.4 | 24.6 | 22.7 | 19.5 |
| Strength retention (%) | 55 | 54 | 54 | 53 | 48 | 41 | 32 |
| Fraying degree | Poor | Fair | Good | Excel-lent | Excel-lent | Excel-lent | Excel-lent |

The effect of the variation in the solid concentration of the processing liquid relative to the friction strength, strength retention, and fraying degree characteristics of the fiber bonded rubber composite is illustrated in the drawing graph.

Industrial applicability

The fiber bonded rubber manufacture of the present invention is advantageously adapted for use in a wide range of products wherein reinforcement of a rubber carcass, or body, is desired, such as in the manufacture of power transmission and carrier belts, hoses, tires, etc. The processing of the fiber by subjecting the fiber to urethane denatured epoxy resin with or without pretreatment with the resorcinol-formalin-latex liquid provides an improved fiber bonded rubber composite structure as indicated in the above tables. As indicated above, the fibers have improved correlated friction bonding strength, strength before bending, strength after bending, strength retention and fray resistance characteristics, permitting the improved structure to be used in a wide range of industrial applications as desired.

The foregoing disclosure of specific embodiments is illustrative of the broad inventive concepts comprehended by the invention.

**Claims**

1. A method of forming a bonded aromatic polyamide fiber and rubber structure comprising the steps of:

(a) subjecting an aromatic polyamide fiber to a treating agent comprising epoxy resin denatured with urethane such that the resin has a urethane bond in the molecule at at least one terminal epoxide group, in a solvent;

(b) drying the treated fiber;

(c) associating the dried treated fiber with a body of unvulcanized rubber compound; and

(d) vulcanizing the rubber compound with said dried treated fiber associated therewith.

2. A method as claimed in claim 1 wherein said aromatic polyamide fiber is formed of any one of the group consisting of poly-p-benzamide, poly-m-benzamide, poly-p-phenyleneterephthalicamide, or poly-m-phenyleneisophtalicamide.

3. A method as claimed in claim 1 or 2 wherein said rubber compound is formed of any one of the group of rubber compounds consisting of styrene-butadiene-vinyl pyridine rubber, ethylene-propylene-terpolymer rubber, isobutylene-isoprene rubber, chloroprene rubber or natural rubber.

4. A method as claimed in claim 1 or 2 wherein said rubber compound is formed of a mixture of at least two different rubbers of the group of rubber compounds consisting of styrene-butadiene-vinyl pyridine rubber, ethylene-propylene-terpolymer rubber, isobutylene-isoprene rubber, chloroprene rubber or natural rubber.

5. A method as claimed in claim 4 wherein said rubber compound comprises a mixture of chloroprene rubber and another rubber selected from the group of styrene-butadiene-vinyl pyridine rubber, ethylene-propylene-terpolymer rubber, isobutylene-isoprene rubber or natural rubber.

6. A method as claimed in any preceding claim, also comprising, between steps (b) and (c), the steps of:

(e) subjecting the dried fiber to a mixture of resorcinol and formalin, and a rubber latex; and

(f) drying the further treated fiber.

7. A method as claimed in claim 6, wherein the mole ratio of resorcinol to formalin in said mixture is in the range of approximately 1:0.5 to 3.

8. A method as claimed in claim 6 or 7, wherein said rubber latex comprises at least one of chloroprene rubber latex and styrene-butadiene-vinyl pyridine rubber latex.

9. A method as claimed in one of claims 6 to 8, further including, prior ot step (c), the step of:

(g) storing the dried further treated fiber.

10. A method as claimed in any preceding claim, wherein step (b), or each of steps (b) and (f), comprises a step of heating the treated fiber.

11. A method as claimed in claim 10, wherein the or each drying step comprises a step of heating the fibers at a temperature in the range of approximately 180°C to 220°—240°C.

12. A method as claimed in claim 10 or 11, wherein the or each drying step comprises a step of heating the fibers for at least approximately 2 minutes.

13. A method as claimed in any preceding claim, wherein the: treating agent comprises epoxy resin denatured with urethane in a liquid solvent carrier, the solid concentration being in the range of approximately 1%—20%.

14. A method as claimed in claim 13 wherein the carrier comprises toluene solvent.

**Patentansprüche**

1. Verfahren zum Herstellen eines verstärkten Gebildes aus aromatischen Polyamidfasern und einem Kautschuk, bei welchem

(a) eine aromatische Polyamidfaser mit einem Behandlungsmittel behandelt wird, welches in einem Lösungsmittel ein in solcher Weise mit Urethan behandeltes Epoxyharz enthält, daß das Harz im Molekül an zumindest einer endständigen Epoxygruppe eine Urethanbindung besitzt,

(b) die behandelte Faser getrocknet wird,

(c) die getrocknete behandelte Faser mit einem Körper aus nicht vulkanisierter Kautschukmischung zusammengebracht wird und

(d) die Kautschukmischung mit der darin eingebrachten getrockneten behandelten Faser vulkanisiert wird.

2. Verfahren nach Anspruch 1, worin die aromatische Polyamidfaser aus irgendeinem der aus der Gruppe Poly-p-benzamid, Poly-m-benzamid, Poly-p-phenylenterephthalsäureamid oder Poly-m-phenylenisophthalsäureamid bestehenden Stoffe gebildet ist.

3. Verfahren nach Anspruch 1 oder 2, worin die Kautschukmischung aus irgend einer der aus Styrol - Butadien - Vinylpyridin - Kautschuk, Äthylen - Propylen - Terpolymer - Kautschuk, Iso-butylen-Iso-pren-Kautschuk, Chloroprenkautschuk oder Naturkautschuk bestehenden Gruppe von Kautschukverbindungen gebildet ist.

4. Verfahren nach Anspruch 1 oder 2, worin die Kautschukmischung aus einem Gemisch von zumindest zwei verschiedenen Kautschukarten aus der aus Styrol-Butadien-Vinylpyridin-Kautschuk, Äthylen-Propylen-Terpolymer-Kautschuk, Isobutylen-Isopren-Kautschuk, Chloroprenkautschuk oder Naturkautschuk bestehenden Gruppe gebildet ist.

5. Verfahren nach Anspruch 4, worin die Kautschukmischung ein Gemisch aus Chloroprenkautschuk und einem anderen aus der von Styrol-Butadien-Vinylpyridin-Kautschuk, Äthylen-Propylen-Terpolymer-Kautschuk, Isobutylen-Isopren-Kautschuk oder Naturkautschuk gebildeten Gruppe ausgewählten Kautschuk darstellt.

6. Verfahren nach irgendeinem der vorhergehenden Ansprüche, bei welchem zwischen den Stufen (b) und (c)

(e) die getrocknete Faser einem Gemisch aus Resorcin und Formalin und einem Kautschuklatex ausgesetzt und

(f) die zusätzlich behandelte Faser getrocknet wird.

7. Verfahren nach Anspruch 6, worin das Molverhältnis von Resorcin zu Formalin in diesem Gemisch im Bereiche von etwa 1:0,5 bis 3 liegt.

8. Verfahren nach Anspruch 6 oder 7, worin der Kautschuklatex zumindest einen der Latexsorten Chloroprenkautschuk-Latex und Styrol-Butadien-Vinylpyridin-Kautschuk-Latex enthält.

9. Verfahren nach irgendeinem der Ansprüche 6 bis 8, bei welchem vor der Stufe (c)

(g) die zusätzlich behandelte Faser gelagert wird.

10. Verfahren nach irgendeinem der vorhergehenden Ansprüche, bei welchem im Zuge der Stufe (b) oder im Zuge jeder der Stufen (b) und (f) die behandelte Faser erwärmt wird.

11. Verfahren nach Anspruch 10, bei welchem im Zuge des Trocknungsschrittes oder eines jeden Trocknungsschrittes die Fasern auf ein Temperatur im Bereiche von etwa 180°C bis 220°—240°C erwärmt werden.

12. Verfahren nach Anspruch 10 oder 11, worin im Zuge des oder eines jeden Trocknungsschrittes die Fasern während zumindest etwa 2 min erwärmt werden.

13. Verfahren nach irgendeinem der vorhergehenden Ansprüche, worin das Behandlungsmittel ein mit Urethan denaturiertes Epoxyharz in einem flüssigen Trägerlösungsmittel enthält, wobei die Feststoffkonzentration im Bereiche von etwa 1% bis 20% liegt.

14. Verfahren nach Anspruch 13, worin der Träger Toluol als Lösungsmittel enthält.

**Revendications**

1. Procédé de fabrication d'une structure à base de caoutchouc et de fibres de polyamide aromatique liés, dans lequel:

(a) on soumet une fibre de polyamide aromatique, à un agent de traitement comprenant, dans un solvant, une résine époxy dénaturée avec un uréthanne de façon que la résine comporte, dans la molécule, une liaison uréthanne au niveau d'un groupe époxy terminal;

(b) on sèche la fibre traitée;

(c) on associe la fibre traitée et séchée, à un corps de composant caoutchouteux non vulcanisé; et

(d) on vulcanise le composant caoutchouteux auquel est associée la fibre traitée et séchée.

2. Procédé selon la revendication 1, dans lequel la fibre de polyamide aromatique est formée à partir d'une résine choisie parmi une résine de poly-p-benzamide, de poly-m-benzamide, de poly-p-phénylène-téréphtalamide ou de poly-m-phénylèneisophtalamide.

3. Procédé selon la revendication 1 ou 2, dans lequel le composant caoutchouteux est choisi parmi les composants caoutchouteux comprenant un caoutchouc de styrène, de butadiène et de vinyl pyridine, un caoutchouc terpolymère d'éthylène et de propylène, un caoutchouc d'isobutylène et d'isoprène, un caoutchouc de chloroprène ou du caoutchouc naturel.

4. Procédé selon la revendication 1 ou 2, dans lequel le composant caoutchouteux est formé à partir d'un mélange d'au moins deux caoutchoucs différents choisis parmi les composants caoutchouteux comprenant un caoutchouc de styrène, de butadiène et de vinyl pyridine, un caoutchouc terpolymère d'éthylène et de propylène, un caoutchouc d'isobutylène et d'isoprène, un caoutchouc de chloroprène ou du caoutchouc naturel.

5. Procédé selon la revendication 4, dans lequel le composant caoutchouteux, comprend un mélange

6

de caoutchouc de chloroprène et d'un autre caoutchouc choisi parmi un caoutchouc de styrène, de butadiène et de vinyl pyridine un caoutchouc terpolymère d'éthylène et de propylène, un caoutchouc d'isobutylène et d'isoprène ou le caoutchouc naturel.

6. Procédé selon l'une quelconque des revendications précédentes, comprenant également, entre les étapes (b) et (c), les étapes consistant:

(e) à soumettre la fibre séchée à un mélange de résorcinol, de formaline et d'un latex de caoutchouc; et

(f) à sécher la fibre à nouveau traitée.

7. Procédé selon la revendication 6, dans lequel le rapport molaire du résorcinol à la formaline dans le mélange, est d'environ 1:0,5 à 3.

8. Procédé selon la revendication 6 ou 7, dans lequel le latex de caoutchouc, comprend au moins un latex choisi parmi un latex de caoutchouc de chloroprène et un latex de caoutchouc de styrène, de butadiène et de vinyl pyridine.

9. Procédé selon l'une quelconque des revendications 6 à 8, comprenant en outre avant l'étape (c), l'étape consistant:

(g) à conserver la fibre à nouveau traitée et séchée.

10. Procédé selon l'une quelconque des revendications précédentes, dans lequel l'étape (b), ou chacune des étapes (b) et (f), comprend une opération de chauffage de la fibre traitée.

11. Procédé selon la revendication 10, dans lequel la ou chaque opération de séchage comprend une opération de chauffage des fibres à une température d'environ 180°C à 220 jusqu'à 240°C.

12. Procédé selon la revendication 10 ou 11, dans lequel la ou chaque opération de séchage comprend une opération de chauffage des fibres pendant au moins environ 2 minutes.

13. Procédé selon l'une quelconque des revendications précédentes, dans lequel l'agent de traitement comprend une résine époxy dénaturée avec un uréthanne, dans un solvant liquide comme véhicule, la concentration en solides étant d'environ 1% à 20%.

14. Procédé selon la revendication 13, dans lequel le véhicule comprend du toluène comme solvant.